(19) Europäisches Patentamt
European Patent Office
Office européen des brevets

(11) **EP 2 147 356 B1**

(12) **EUROPÄISCHE PATENTSCHRIFT**

(45) Veröffentlichungstag und Bekanntmachung des Hinweises auf die Patenterteilung:
**29.05.2013 Patentblatt 2013/22**

(21) Anmeldenummer: **08749771.5**

(22) Anmeldetag: **28.04.2008**

(51) Int Cl.:
*G05B 17/02* (2006.01)     *G08G 1/01* (2006.01)

(86) Internationale Anmeldenummer:
**PCT/EP2008/055135**

(87) Internationale Veröffentlichungsnummer:
**WO 2008/138734 (20.11.2008 Gazette 2008/47)**

(54) **VERFAHREN UND SYSTEM ZUR STEUERUNG VON OBJEKTBEWEGUNGEN**

METHOD AND SYSTEM FOR CONTROLLING OBJECT MOVEMENTS

PROCÉDÉ ET SYSTÈME DE COMMANDE DES DÉPLACEMENTS D'UN OBJET

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **11.05.2007 DE 102007022169**

(43) Veröffentlichungstag der Anmeldung:
**27.01.2010 Patentblatt 2010/04**

(73) Patentinhaber: **Siemens Aktiengesellschaft 80333 München (DE)**

(72) Erfinder:
- **KLEIN, Wolfram**
  **85579 Neubiberg (DE)**
- **KÖSTER, Gerta**
  **81543 München (DE)**

(56) Entgegenhaltungen:
**DE-C2- 10 036 364**

- **LIPING FU ET AL: "An adaptive model for real-time estimation of overflow queues on congested arterials" INTELLIGENT TRANSPORTATION SYSTEMS, 2001. PROCEEDINGS. 2001 IEEE AUGUST 25-29, 2001, PISCATAWAY, NJ, USA, IEEE, 25. August 2001 (2001-08-25), Seiten 219-226, XP010555773 ISBN: 978-0-7803-7194-1**
- **SHEN GUOJIANG ET AL: "Urban expressway traffic flow modeling and control using artificial neural networks" INTELLIGENT TRANSPORTATION SYSTEMS, 2003. PROCEEDINGS. 2003 IEEE OCT. 12-15, 2003, PISCATAWAY, NJ, USA,IEEE, Bd. 1, 12. Oktober 2003 (2003-10-12), Seiten 836-841, XP010673575 ISBN: 978-0-7803-8125-4**
- **BASILE F ET AL: "A hybrid model for urban traffic control" SYSTEMS, MAN AND CYBERNETICS, 2004 IEEE INTERNATIONAL CONFERENCE ON THE HAGUE, THE NETHERLANDS 10-13 OCT. 2004, PISCATAWAY, NJ, USA,IEEE, Bd. 2, 10. Oktober 2004 (2004-10-10), Seiten 1795-1800, XP010772530 ISBN: 978-0-7803-8566-5**

**Beschreibung**

Die Erfindung betrifft ein Verfahren für ein System zur Steuerung von Bewegungen einer Vielzahl von Objekten in einem vorgegebenen Beobachtungsgebiet.

In vielen Bereichen ist es notwendig die Anzahl bzw. die Dichte von Objekten in einem vorgegebenen Gebiet zu bestimmen und gegebenenfalls die Bewegung dieser Objekte zu steuern. Beispielsweise muss an einem öffentlichen Veranstaltungsort aus Sicherheitsgründen die Anzahl von Menschen in Teilgebieten des Veranstaltungsortes beobachtet werden und gegebenenfalls sind bei sicherheitskritischen Ansammlungen von Personen Maßnahmen zu ergreifen. Solche Veranstaltungen sind beispielsweise Konzerte, öffentliche Feste und Versammlungen.

Dabei ist es notwendig eine möglichst gute Prognose über den zeitlichen Verlauf der Bewegung einer Vielzahl von Personen durchzuführen. Für das Zählen von Menschen an Veranstaltungsorten gibt es verschiedene konventionelle Lösungsansätze. Ein Lösungsansatz besteht darin, Menschen an Ein- und Ausgängen zu zählen, d. h. die Anzahl der an dem Veranstaltungsort ankommenden und von dem Veranstaltungsort weggehenden Personen wird per Hand oder automatisch gezählt. Dieser Lösungsansatz ist mühsam und fehlerträchtig und erlaubt nur Aussagen über die Zahl der Personen im gesamten Beobachtungsgebiet jedoch nicht in Teilbereichen. Wird auf diese Weise die Anzahl von an einem Konzert teilnehmenden Personen erfasst, so können kritische Verdichtungen von Personen, beispielsweise im Bühnenbereich des Konzerts, nicht erkannt werden. Oft werden die Veranstaltungsorte oder Beobachtungsgebiete mit Kameras überwacht. Basierend auf 2D-Kameraaufnahmen ist es möglich die aufgenommenen Menschen zu zählen. Dabei werden statisch die auf dem Bild abgebildeten Köpfe der Personen zur Dichtemessung zum Teil auch bereits automatisch gezählt. Auch bei diesen herkömmlichen Systemen ist es jedoch nicht möglich, die Bewegung von Personen auszuwerten und vorherzusagen oder Aussagen über zukünftig auftretende Menschenansammlungen zu treffen. Ein weiterer Nachteil der herkömmlichen Vorgehensweise besteht darin, dass in den meisten Fällen ein großer Anteil des Gebietes beziehungsweise des Veranstaltungsortes nicht mit Kameras abgedeckt ist. Beispielsweise ist es mit in dem Außenbereich installierten Kameras nicht möglich, Objekte beziehungsweise Personen innerhalb von Gebäuden zu beobachten. Weiterhin besteht die Möglichkeit, dass einige Teilgebiete nicht mit Kameras versehen sind oder einige Kameras ausfallen.

Der Artikel "Ein adaptives Modell zur Echtzeit-Abschätzung von Abfahrt-Autoschlangen auf verstopften Fernstraßen" von Liping Fu, Bruce Hellinga und Yongliang Zhu in Intelligent Transportation Systems, 2001. Proceedings. 2001 IEEE August 25-29, 2001, Piscataway, NJ, USA, IEEE, 25. August 2001 (2001-08-25), Seiten 219-226, XP010555773 ISBN: 978-0-7803-7194-1 offenbart, dass die Fähigkeit zur Abschätzung des Status eines aktuellen Verkehrsstaus eines Straßennetzwerks von großer Wichtigkeit für viele intelligente Transportsystemanwendungen ist, wie es beispielsweise Routenführungssysteme in Fahrzeugen und fortgeschrittene Verkehrsmanagementsysteme sind. Der Artikel beschreibt ein Modell, dass zur Abschätzung einer der Verstopfungsmaße verwendet werden kann, nämlich Annäherungen über Echtzeit-Abfahrt-Autoschlangen bei angezeigten Fernstraßen.

Es ist daher eine Aufgabe der vorliegenden Erfindung, ein System zur sicheren Steuerung von Objektbewegungen in einem vorgegebenen Gebiet zu schaffen, das eine zuverlässige Prognose der Objektbewegungen innerhalb des Gebietes erlaubt und die Bewegung der Objekte zuverlässig derart steuert, dass sicherheitskritische Verdichtungen von Objekten vermieden werden.

Diese Aufgabe wird erfindungsgemäß durch ein Verfahren mit dem im Patentanspruch 1 angegebenen Merkmal gelöst.

Die Erfindung schafft ein Verfahren zur Steuerung von Bewegungen einer Vielzahl von Objekten in einem vorgegebenen Gebiet, das mehrere aneinandergrenzende Teilgebiete aufweist, mit den folgenden Schritten:

Berechnen einer nach einer vorgegebenen Prognosezeitdauer zu erwartenden Anzahl von Objekten pro Teilgebiet mittels eines adaptiven Prognosemodells in Abhängigkeit von einer Anzahl von Objekten in den Teilgebieten;

Vergleichen der berechneten Anzahl von Objekten in den Teilgebieten mit einer nach Ablauf der vorgegebenen Prognosezeitdauer erfassten Anzahl von Objekten in den Teilgebieten zur Adaption des Prognosemodells für den nächsten Berechnungsschritt; und

Steuern der Bewegung der Objekte in Abhängigkeit von der erfassten Anzahl von Objekten in den Teilgebieten.

Bei einer Ausführungsform des erfindungsgemäßen Verfahrens wird die Bewegung der Objekte direkt gesteuert.

Bei einer Ausführungsform des erfindungsgemäßen Verfahrens wird die Bewegung der Objekte indirekt mittels Aktoren gesteuert.

Bei einer Ausführungsform des erfindungsgemäßen Verfahrens werden die Teilgebiete durch Vielecke gebildet.

Bei einer Ausführungsform des erfindungsgemäßen Verfahrens werden die Teilgebiete durch Sechsecke gebildet.

Bei einer Ausführungsform des erfindungsgemäßen Verfahrens weist das adaptive Prognosemodell für jedes Objekt ein zugehöriges Objektmodell auf.

Bei einer Ausführungsform des erfindungsgemäßen Verfahrens weist jedes Objektmodell mindestens eine Regel auf, die ein Bewegungsverhalten oder einen Zustand des Objekts beschreibt.

Bei einer Ausführungsform des erfindungsgemäßen Verfahrens gehört jedes Objekt einer zugehörigen Objektklasse an.

Bei einer Ausführungsform des erfindungsgemäßen Verfahrens erfolgt die Adaption des Prognosemodells durch Anpassung von Modellparametern oder Regeln.

Bei einer Ausführungsform des erfindungsgemäßen Verfahrens wird bei der Erfassung der aktuellen Anzahl von Objekten in den Teilgebieten geprüft, ob mindestens eine Regel eines Objektmodells verletzt wird.

Bei einer Ausführungsform des erfindungsgemäßen Verfahrens wird, wenn mindestens eine Regel eines Objektmodells verletzt wird, die Bewegung von realen Objekten derart gesteuert, dass nach Ablauf der Prognosezeitdauer keine Regelverletzung mehr vorliegt.

Bei einer Ausführungsform des erfindungsgemäßen Verfahrens wird das Prognosemodell unter Berücksichtigung der vorgenommenen Steuervorgänge adaptiert.

Bei einer Ausführungsform des erfindungsgemäßen Verfahrens wird das Prognosemodell zur Berücksichtigung von Umweltänderungen in dem Gebiet adaptiert.

Bei einer Ausführungsform des erfindungsgemäßen Verfahrens werden die Objekte durch bewegliche oder durch unbewegliche Objekte gebildet.

Bei einer Ausführungsform des erfindungsgemäßen Verfahrens weisen die beweglichen Objekte Lebewesen oder mobile Geräte auf.

Bei einer Ausführungsform des erfindungsgemäßen Verfahrens sind die Lebewesen Personen oder Tiere.

Bei einer Ausführungsform des erfindungsgemäßen Verfahrens sind die mobilen Geräte Fahrzeuge.

Die Erfindung schafft ferner eine Steuereinheit zur Steuerung von Bewegungen einer Vielzahl von Objekten in einem vorgegebenen Gebiet, das mehrere aneinander grenzende Teilgebiete aufweist, wobei die Steuereinheit eine in einem Prognosezeitraum zu erwartende Anzahl von Objekten mittels eines adaptiven Prognosemodells in Abhängigkeit von einer erfassten Anzahl von Objekten in den Teilgebieten berechnet, wobei die Steuereinheit die berechnete zu erwartende Anzahl von Objekten in den Teilgebieten zwischenspeichert und nach Ablauf der Prognosezeitdauer mit der dann erfassten Anzahl von Objekten in den Teilgebieten zur Adaption des Prognosemodells vergleicht, und wobei die Steuereinheit die Bewegung von Objekten in Abhängigkeit von der erfassten Anzahl von Objekten in den Teilgebieten steuert.

Die Erfindung schafft ferner ein System zur Steuerung von Bewegungen einer Vielzahl von Objekten in einem vorgegebenen Gebiet, das mehrere aneinandergrenzende Teilgebiete aufweist, mit:

(a) Erfassungseinheiten zur Erfassung einer Anzahl von Objekten in den Teilgebieten; und mit

(b) einer Steuereinheit zur Berechnung einer nach einer Prognosezeitdauer zu erwartenden Anzahl von Objekten in den Teilgebieten mittels eines adaptiven Prognosemodells in Abhängigkeit von der erfassten Anzahl von Objekten in den Teilgebieten,

wobei die Steuereinheit die berechnete zu erwartende Anzahl von Objekten in den Teilgebieten zwischenspeichert und nach Ablauf der Prognosezeitdauer mit der dann erfassten Anzahl von Objekten in den Teilgebieten zur Adaption des Prognosemodells vergleicht,

und wobei die Steuereinheit die Bewegung von Objekten in Abhängigkeit von der erfassten Anzahl von Objekten in den Teilgebieten steuert.

Im Weiteren werden bevorzugte Ausführungsformen des erfindungsgemäßen Verfahrens und des erfindungsgemäßen Systems zur Steuerung von Objektbewegungen zur Beschreibung erfindungswesentlicher Merkmale unter Bezugnahme auf die beigefügten Figuren erläutert.

Es zeigen:

Fig. 1     ein Diagramm zur Darstellung eines Beispiels für ein Beobachtungsgebiet zur Erläuterung der Funktionsweise des erfindungsgemäßen Verfahrens;

Fig. 2     ein Blockschaltbild eines Ausführungsbeispiels für ein erfindungsgemäßes System zur Steuerung von Objektbewegungen;

Fig. 3     ein Ablaufdiagramm zur Darstellung einer Ausführungsform des erfindungsgemäßen Verfahrens zur Steuerung von Objektbewegungen;

Fig. 4     ein Diagramm zur Darstellung der Einteilung eines Gebietes in Teilgebiete gemäß einem Ausführungsbeispiel des erfindungsgemäßen Systems zur Steuerung von Objektbewegungen;

Fig. 5    ein Diagramm zur Darstellung einer möglichen Ausführungsform eines personenunabhängigen Prognosemodells gemäß einem Ausführungsbeispiel des erfindungsgemäßen Systems zur Steuerung von Objektbewegungen.

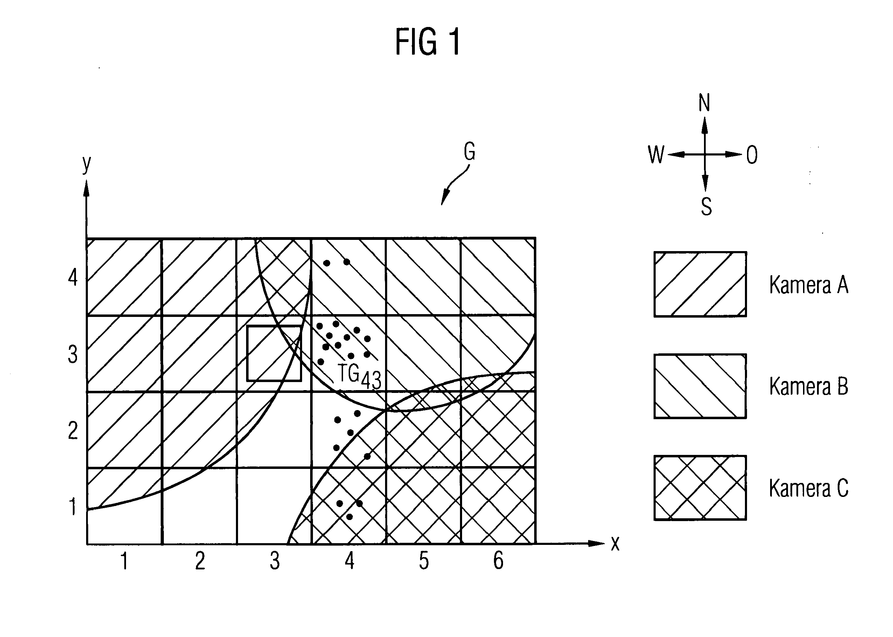

Wie man aus Fig. 1 erkennen kann, wird ein Gebiet bzw. ein Beobachtungsgebiet G in eine Vielzahl aneinandergrenzender Teilgebiete TG zergliedert, bei denen es sich vorzugsweise um Vielecke beliebiger Größe handelt. Bei dem in Fig. 1 dargestellten Ausführungsbeispiel sind die Teilgebiete aneinandergrenzende Vierecke gleicher Größe. Bei alternativen Ausführungsformen wird das Gesamtgebiet in Vielecke, insbesondere in Sechsecke aufgeteilt. Bei dem in Fig. 1 dargestellten Beispiel wird das Beobachtungsgebiet G in 6 x 4 Teilgebiete TG unterteilt. Die Gesamtheit der Teilgebiete TG überdeckt vorzugsweise das Gesamtgebiet G.

In dem Beobachtungsgebiet G befinden sich mehrere Objekte, nämlich einerseits bewegliche Objekte und andererseits unbewegliche Objekte. Bei den beweglichen Objekten handelt es sich beispielsweise um Personen, Tiere oder Fahrzeuge. Neben den beweglichen Objekten sind in dem Beobachtungsgebiet G auch unbewegliche Objekte vorhanden. Bei dem Beobachtungsgebiet G handelt es sich beispielsweise um einen Veranstaltungsort, etwa um das Gebiet des Oktoberfestes. Dieses Beobachtungsgebiet wird für statistische und kaufmännische Zwecke sowie zur Gewährleistung der Sicherheit am Veranstaltungsort, beobachtet. Bei den unbeweglichen Objekten, die sich beispielsweise auf dem Gebiet des Oktoberfest befinden, kann es sich beispielsweise um Bierzelte, Fahrgeschäfte oder Verkehrsvorrichtungen, beispielsweise um Ampeln, Schranken oder dergleichen handeln. Ein Objekt, sei es beweglich oder unbeweglich, kann in seinem Bewegungsverhalten bzw. in seiner Auswirkung auf das Bewegungsverhalten anderer Objekte durch ein Objektmodell beschrieben werden, das eine oder mehrere Regeln enthält. Die Gruppe von Regeln beschreibt das Bewegungsverhalten des jeweiligen Objekts.

Ein Objekt kann einer bestimmten Objektklasse angehören. Jede Objektklasse kann seinerseits in Unterklassen untergliedert sein. Mögliche Objektklassen für bewegliche Objekte sind beispielsweise Fahrzeuge, Fahrradfahrer, Fußgänger usw. Unterklassen für Fahrzeuge sind beispielsweise Lkws oder Personenkraftwagen. Auch die unbeweglichen Objekte können bezüglich ihrer Auswirkung auf die Bewegung anderer Objekte durch Regeln innerhalb eines Objektmodells beschrieben werden. Beispielsweise weist ein Bierzelt als Objekt mehrere Ein- und Ausgänge auf und besitzt eine maximale Kapazität an Personen, die sich innerhalb des Bierzelts befinden können.

Bei dem in Fig. 1 dargestellten Beispiel verläuft eine Straße durch die Teilgebiete $TG_{4-4}$, $TG_{4-3}$, $TG_{4-2}$, $TG_{4-1}$ in Nord-Südrichtung. Auf der Straße befinden sich bewegliche Objekte, die als Punkte dargestellt sind, wobei es sich bei diesen Objekten um Personen handelt. In dem Teilgebiet $TG_{3-3}$ befindet sich als unbewegliches Objekt ein Bierzelt. In dem dargestellten Beispiel kommt es im Teilgebiet $TG_{4-3}$ zu einer Menschenansammlung, da eine Vielzahl von Personen vor dem Eingang des Bierzelts auf Einlass warten. In dem in Fig. 1 dargestellten Ausführungsbeispiel wird das Beobachtungsgebiet TG mittels Kameras überwacht, die jeweils verschiedene Teilgebiete TG abdecken. Die beispielhafte Ausführungsform mit Kameras ist nicht Gegenstand dieser Erfindung. Diese Kameras bilden optische Erfassungseinheiten, welche die aktuelle Anzahl von Objekten in den von ihnen abgedeckten Teilgebieten TG jeweils erfassen. Beispielsweise ist es möglich, aus dem Videostream einer Kamera die Anzahl der Objekte in dem Teilgebiet $TG_{4-4}$ zu erfassen. In dem angegebenen Beispiel beträgt die Anzahl der beweglichen Objekte innerhalb des Teilgebiets $TG_{4-4}$ zwei. Jede Erfassungseinheit ist in der Lage, für alle von ihr abgedeckten Teilgebiete die aktuelle Anzahl von Objekten pro Teilgebiet zu einem bestimmten Zeitpunkt t bzw. zu einer bestimmten Uhrzeit zu erfassen.

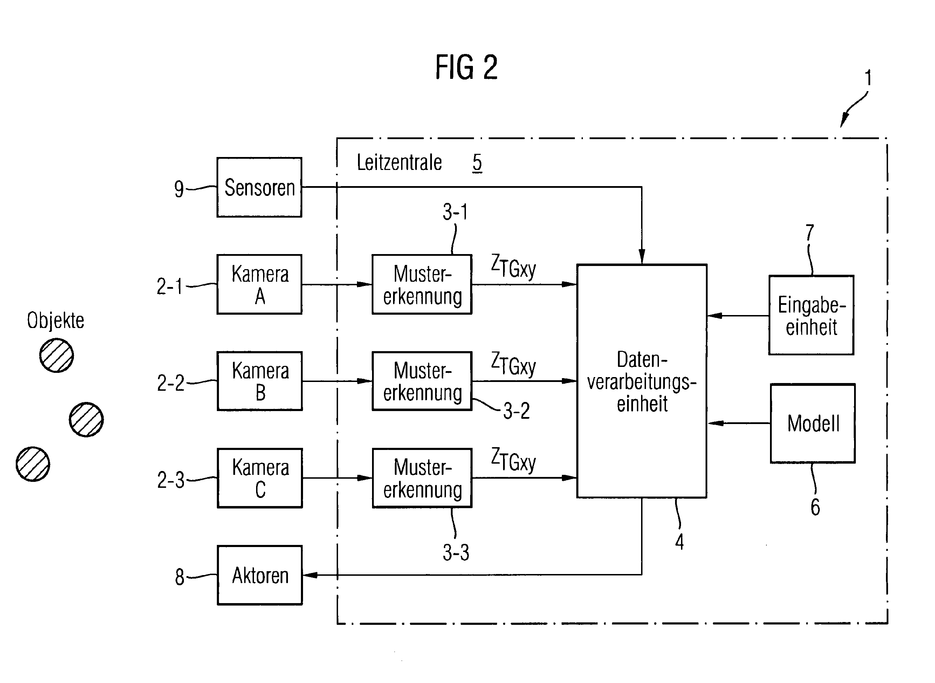

Das System 1 gemäß Fig. 2 dient zur Steuerung von Objektbewegungen. Das System 1 enthält mehrere Erfassungseinheiten 2-1, 2-2, 2-3, die bei dem gewählten Beispiel durch die drei Kameras A, B, C gemäß Fig. 1 gebildet werden. Bei dem erfindungsgemäßen Systems 1 umfassen die eingesetzten Erfassungseinheiten eine Basisstation eines Funknetzes.

Das Vorhandensein von Objekten in Teilgebieten TG wird durch Funksignale erfasst, die die Objkte mit einer Basisstation eines Funknetzes austauschen. Personen tragen in der Regel ein Mobiltelefon mit sich, das Signale mit einer Basisstation eines Funknetzes austauscht. Aufgrund dieser Funksignale ist es möglich, das Vorhandensein der Person innerhalb eines Teilgebiets T6 festzustellen.

Die Kameras 2-1, 2-2, 2-3 sind mit Einheiten 3-1, 3-2, 3-3 zur Erkennung bzw. Feature-Extraktion verbunden. Diese Einheiten werten die ankommenden Bildsequenzen aus und übermitteln aus den aufgenommenen Bildern automatisch die Anzahl der Objekte jeweils für alle Teilgebiete TG, die durch die jeweilige Kamera abgedeckt sind. Beispielsweise ermittelt die Mustererkennungseinheit 3-2 für die Kamera 2-2 (Kamera B) in dem Teilgebiet $TG_{4-4}$ zwei Objekte und in dem Teilgebiet $TG_{4-3}$ zehn Objekte. Die elfte Person am linken unteren Bereich des Teilgebiets $TG_{4-3}$ liegt außerhalb der Reichweite der Erfassungseinheit 2-2. Bei einer möglichen Ausführungsform wird, wenn ein Teilgebiet TG durch eine Erfassungseinheit 2 nicht vollständig abgedeckt wird, aus der Dichte der Objekte im erfassten Bereich die Gesamtanzahl von Objekten im gesamten Teilgebiet TG extrapoliert. In dem dargestellten Beispiel gemäß Fig. 1 liefert die Mustererkennungseinheit 3-2 Zählwerte Z an eine Datenverarbeitungseinheit 4 innerhalb einer Leitzentrale 5, nämlich $Z_{4-4} = 2$ und $Z_{4-3} = 10$. Die Datenverarbeitungseinheit 4 enthält beispielsweise einen Mikroprozessor bzw. eine CPU und berechnet nach einer vorgegebenen Prognosezeitdauer $\Delta t$ auf Grundlage der aktuellen Anzahl von Objekten in den Teilgebieten TG, die zu erwartende Anzahl von Objekten pro Teilgebiet TG mittels eines adaptiven Prognosemodells, das beispielsweise in einem Speicher 6 abgelegt ist. Die Parameter des Prognosemodells sind dabei anpassbar. Die Anpassung der Modellparameter erfolgt beispielsweise durch einen Nutzer über eine Eingabeeinheit 7. Zusätzlich erfolgt eine kontinuierliche Anpassung des adaptiven Prognosemodells in Abhängigkeit von einem Vergleichsergebnis zwischen einer berechneten zu erwarteten Anzahl von Objekten in den Teilgebieten TG und einer nach Ablauf der vorgegebenen Prognosezeitdauer tatsächlich erfassten aktuellen Anzahl von Objekten in den Teilgebieten TG. Die Datenverarbeitungseinheit 4 der Leitzentrale 5 steuert in Abhängigkeit von der aktuellen Anzahl von Objekten in den Teilgebieten TG dann die Bewegung der Objekte.

Die Steuerung der Objektbewegungen erfolgt entweder direkt oder indirekt mittels Aktoren 8. Bei der direkten Ansteuerung werden beispielsweise Fahrzeuge direkt von der Leitzentrale 5 in eine bestimmte Richtung mit einer bestimmten Geschwindigkeit gelenkt. Die indirekte Steuerung der Objektbewegungen erfolgt mittels Aktoren 8, bei denen es sich beispielsweise um schließbare Türen, Schranken, Ampeln oder sonstige Verkehrsleitmittel handelt. Sind die Objekte beispielsweise Personen, kann die Bewegung der Objekte auch durch Lautsprecheransagen gesteuert werden.

Darüber hinaus verfügt das erfindungsgemäße System 1 bei einer Ausführungsform über Sensoren 9, die Umweltbedingungen erfassen. Beispielsweise erfassen die Sensoren 9 die Tageszeit bzw. die Lichtverhältnisse und die Wetterverhältnisse im Beobachtungsgebiet G. Personen als Objekte verhalten sich bei schlechtem Wetter bzw. Regen anders als bei schönem Wetter. Bei aufkommendem schlechtem Wetter neigen Personen dazu, Schutz in Gebäuden als unbewegliche Objekte zu suchen. Beliebige Aktoren 8 und Sensoren 9 können bei dem erfindungsgemäßen System 1 eingesetzt werden. Ein Aktor 8 ist jede beliebige Einheit, die Einfluss auf das Bewegungsverhalten eines Objekts hat. Die Sensoren 9 können jeden beliebigen Umweltparameter, wie beispielsweise Temperatur, Helligkeit oder auch Wetterverhältnisse im Beobachtungsgebiet G erfassen.

Durch die direkte oder indirekte Steuerung der Objektbewegungen ändern sich die realen Verhältnisse an dem Veranstaltungsort bzw. in dem Beobachtungsgebiet. Beispielsweise führt das Schließen einer Schranke in einer Straße dazu, dass Personen von einem Teilgebiet $TG_A$ nicht in ein anderes Teilgebiet $TG_B$ gelangen können. Daher wird bei dem erfindungsgemäßen Verfahren das adaptive Prognosemodell bei jedem Iterationsschritt bzw. nach Ablauf der Prognosezeitdauer adaptiv fortlaufend in Abhängigkeit von den vorgenommenen Steuerungsvorgängen angepasst bzw. adaptiert. Hierzu werden einer oder mehrere Modell-Parameter verändert.

Das bei einem erfindungsgemäßen System 1 verwendete Prognose- bzw. Simulationsmodell verwendet für die Prognose nicht nur simulierte Daten, sondern auch in Echtzeit erfasste reale Daten, insbesondere die Anzahl von Personen in jeweiligen Teilgebieten TG. Es entsteht auf diese Weise ein in Echtzeit laufender Regelkreis aus Prognose und Modelladaption. Bei einer möglichen Ausführungsformen kann das adaptive Prognosemodell verschiedene Szenarien berücksichtigen, die insbesondere von der Umwelt abhängen. Beispielsweise ist bei regnerischem Wetter der Zustrom zu den Bierzelten auf dem Oktoberfest weg von den Fahrgeschäften groß. Ein weiterer Einflussfaktor ist die Tageszeit. Beispielsweise ist mit einem erhöhten abendlichen Zustrom zu den Bierzelten weg von Fahrgeschäften zu rechnen. Ein weiteres Beispiel ist ein Kindernachmittag, bei dem mit einem erhöhten Zustrom zu den Fahrgeschäften zu rechnen ist. Die Steuerung und Regelung der Menschenströme erfolgt dann basiert auf den erzielten Auswertungsergebnissen. Die Steuer- bzw. Leitzentrale 5 kann verschiedene Maßnahmen zur Lenkung bzw. zur Steuerung der Objektbewegungen ergreifen. Beispiele sind das Einschalten von Lautsprecheranlagen, das Geben von Warnhinweisen sowie das An- und Ausschalten von Hinweisschildern, Fluchtschildern, die Einrichtung von Einbahnstraßen, bewusstes Steuern der Richtung von Rolltreppen, Steuerung von Nahverkehrszügen sowie die Koordination der unterschiedlichen Maßnahmen, beispielsweise akustische und visuelle Warnung von Personen.

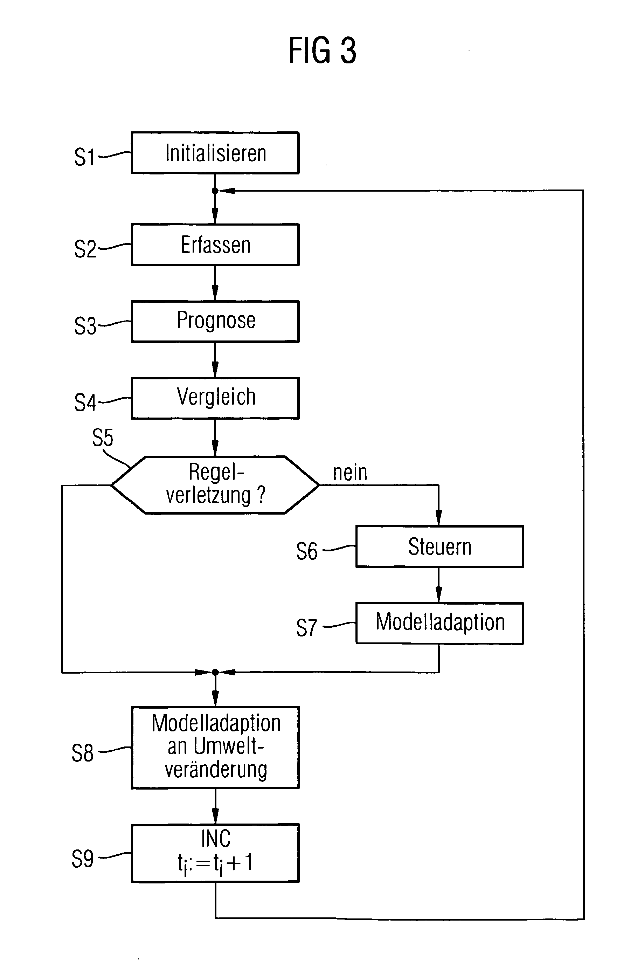

Fig. 3 zeigt ein Ablaufdiagramm einer möglichen Ausführungsform des erfindungsgemäßen Verfahrens zur Steuerung von Objektbewegungen.

In einem ersten Schritt S1 erfolgt eine Initialisierung des Systems 1, beispielsweise wird eine Verteilung der Personen im Beobachtungsgebiet G eingelesen.

In einem Schritt S2 werden für einen bestimmten Zeitpunkt ti die Anzahl von Objekten pro Teilgebiet TG im gesamten Beobachtungsgebiet G mittels der Erfassungseinheiten 2 erfasst. Es werden auch die zu zurückliegenden Zeitpunkten $t_{i-1}$, ..., $t_{i-k}$ erfassten Personen bzw. Objektverteilungen aus einem Speicher ausgelesen.

In einem Schritt S3 erfolgt eine Prognose für zukünftige Zeitpunkte $t_{1+1}$, ... $t_{i+x}$ mittels des adaptiven Prognosemodells.

In einem weiteren Schritt S4 erfolgt ein Vergleich mit einem Sollzustand zum Zeitpunkt $t_i$. Dabei wird die erfasste aktuelle Anzahl von Objekten in den Teilgebieten TG mit der erwarteten Anzahl von Objekten in den Teilgebieten TG verglichen und in einem Schritt S5 entschieden, ob eine Regelverletzung vorliegt. Das adaptive Prognosemodell enthält für jedes Objekt ein zugehöriges Objektmodell, welches seinerseits mehrere Regeln aufweist, die das Bewegungsverhalten des jeweiligen Objekts beschreiben. Eine Regel gibt beispielsweise an, wie sich eine Person bewegt. Beispielsweise bewegt sich eine Person in einem Gebiet mit einer gewissen Geschwindigkeit von beispielsweise 5 km = 1,38 m pro Sekunde bei gutem Wetter und mit der doppelten Geschwindigkeit bei schlechtem Wetter.

Die Erfassung der Daten im Schritt S2 erfolgt mit einer gewissen Erfassungsrate in regelmäßigen Abständen von beispielsweise Δt = 10 s. Ein anderes Beispiel einer Regelverletzung ist, wenn bei einem nicht mobilen Objekt (z. B. einem Bierzelt) die maximale Füllkapazität überschritten wird.

Wird in Schritt S5 eine Regelverletzung festgestellt, steuert die Datenverarbeitung 4 im Schritt S6 die Bewegung der Objekte direkt oder indirekt in Abhängigkeit von der erfassten Anzahl von Objekten in den unterschiedlichen Teilgebieten TG. Beispielsweise wird die Tür eines Bierzeltes automatisch geschlossen, wenn die maximale Kapazität des Bierzeltes erreicht ist.

Wird im Schritt S5 eine Regelverletzung erkannt und wird ein Steuervorgang im Schritt S6 durchgeführt, so erfolgt im Schritt S7 eine Modelladaption zur Berücksichtigung der durch den Steuerungsvorgang ausgelösten Veränderungen im Beobachtungsgebiet G. Wird beispielsweise eine Schranke geschlossen, so wird im Schritt S7 das Prognosemodell entsprechend angepasst.

Wird im Schritt S5 keine Regelverletzung ermittelt, so erfolgt direkt eine Modelladaption an Umweltänderungen im Schritt S8. Die Adaption des Prognosemodells berücksichtigt veränderte Umweltbedingungen, d. h. exogene Faktoren, wie Uhrzeit, Tageszeit oder sonstige Veränderung von Umweltbedingungen. Anschließend erfolgt eine Inkrementierung der Erfassungszeit und der Vorgang kehrt zu Schritt S2 zurück.

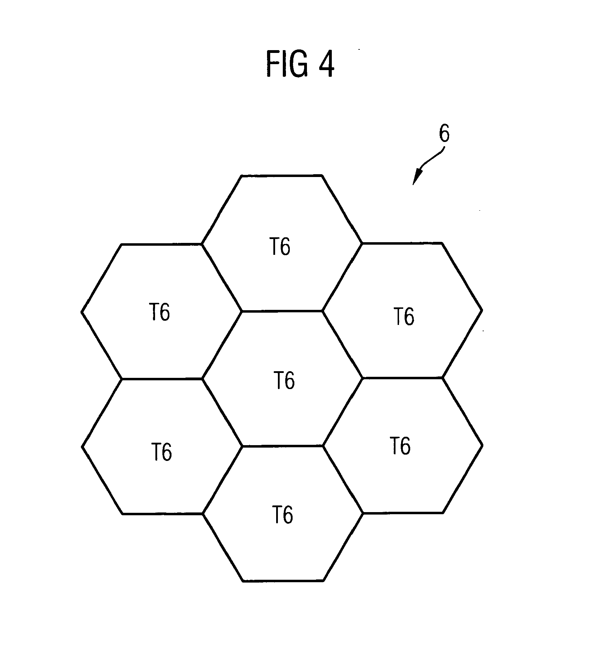

Fig. 4 zeigt die Einteilung des Gebietes G in Teilgebiete TG, die allesamt aus Sechsecken bestehen. Die Sechsecke bedecken das gesamte Beobachtungsgebiet G, ohne dass die Sechsecke sich überlappen. Der Vorteil der Einteilung in Sechsecke besteht darin, dass die Sechsecke die ungestörte Ausbreitung von Funkwellen, die sich ringförmig ausbreiten, besser als Dreiecke oder Rechtecke imitieren. Darüber hinaus suggerieren Sechsecke beispielsweise sechs Vorzugsrichtungen, die das menschliche Laufverhalten besser wiedergeben als Drei- oder Vierecke.

Nach dem Initialisierungsschritt S1 ist in jedem Sechseck zum Startzeitpunkt die Anzahl der Personen in dem jeweiligen Sechseck bekannt. Bei einer möglichen Ausführungsform wird davon ausgegangen, dass sich die beweglichen Objekte bzw. Personen in der Normalen-Richtung zu den Rändern des Sechsecks, d.h. senkrecht zu den Rändern, hinbewegen, wodurch die Modellierung vereinfacht wird. Auf Straßen wird durch den Straßenverlauf eine gewisse Vorzugsrichtung festgelegt. Die Person bzw. die beweglichen Objekte bewegen sich mit einer gewissen Geschwindigkeit V, die pro Person, pro Teilgebiet und abhängig von dem entsprechenden Szenario, beispielsweise dem Wetter variieren kann. Die Anzahl bzw. die Größe der Sechsecke beeinflusst die Berechnungsgenauigkeit.

Das bei dem erfindungsgemäßen Verfahren verwendete adaptive Prognosemodell ist bei einer möglichen Ausführungsform personenspezifisch, beispielsweise simuliert das adaptive Prognosemodell bei einem einfachen Ansatz eine Brownsche Bewegung der beweglichen Objekte. Derartige Brownsche Bewegungen eignen sich als Default-Bewegungsmodell insbesondere dann, wenn noch keine empirischen Daten über das Bewegungsverhalten der Objekte vorliegen, die mit Regel- und Wahrscheinlichkeitsverteilungen abgebildet werden können. Bei diesem einfachen Prognosenmodell wird jedem beweglichen Objekt bzw. jeglicher Person zu jedem Zeitpunkt eine zufällige Geschwindigkeit sowie eine zufällige Richtung zugeordnet. Die Zuordnung der Richtung erfolgt beispielsweise, wenn man eine von sechs möglichen Richtungen mit einem Zufallsgenerator generiert. Jede Person bzw. jedes Objekts wird mit einer vorgegebenen oder zufälligen Geschwindigkeit in eine zufällige ermittelte Richtung bewegt und daraus eine Prognose für Aufenthaltsort der Objekte nach Ablauf der Prognosezeitdauer berechnet. Diese simulierten Aufenthaltsorte bzw. Positionen werden dann mit den tatsächlich vorliegenden Beobachtungen, die mittels der Erfassungseinheiten 2 erfasst werden, verglichen und das adaptive Prognosemodell entsprechend angepasst. Dies geschieht beispielsweise über Anpassung von Parametern, die die Regeln beschreiben. Beispielsweise kann jeder Person ein Ziel zugeordnet sein, das ihre Fortbewegung beeinflusst. Bei Szenarienwechseln, beispielsweise bei einem Wetterumschwung, kann das Ziel verändert werden. Beispielsweise anstatt dem Zielort "Riesenrad" kann vielmehr der neue Zielort "Bierzelt" sein. Die Anpassung der Regeln bzw. des Modells erfolgt automatisch durch Auswertung von aufeinander folgenden Fotos. So können Regeln zu einem Teilgebiet aufgestellt werden und auf strukturell ähnliche Teilgebiete übertragen werden. Bei einer möglichen Ausführungsform des personenspezifischen adaptiven Prognosemodell bewegt sich jedes Objekt im Beobachtungsgebiet mit einer gewissen Wahrscheinlichkeit in eine von beispielsweise sechs verfügbaren Richtungen. Konkret wird beispielsweise eine Zufallszahl [1, 6]gewürfelt und als Richtung für diese Einzelperson relativ zu einer Kantennummerierung festgesetzt. Auch die Geschwindigkeit der Person bzw. des Objekts unterliegt einer Wahrscheinlichkeitsverteilung. Es kann beispielsweise eine Zufallszahl aus [0, 1] gewürfelt werden, mit einer typischen, beispielsweise maximal angesetzten Fußgängergeschwindigkeit von beispielsweise v = 5 km pro Stunde. Eine Person zum Zeitpunkt t ist nun eindeutig gekennzeichnet durch einen Ort (x, y), die gewürfelte Vorzugsrichtung d sowie eine Geschwindigkeit v, und somit ist das bewegliche Objekt Person über einen Vektor (x, y, d, v) eindeutig definiert. Der Zustand eines Teilgebiets ist festgelegt durch einen aus mehreren Personen bestehenden Vektor. Wenn die Daten periodisch mit einer Periodendauer Δt von beispielsweise 10 s erfasst werden, bewegen sich die betrachteten Personen innerhalb eines Taktzyklus statistisch um die Strecke: $s = v \cdot \Delta t$, entlang der Vorzugsrichtung d.

Die Geschwindigkeit bzw. Streckenlänge kann personenspezifisch variiert werden, etwa durch Würfeln eines spezifischen Wertes aus dem Intervall [0, 1] und durch Multiplikation mit diesem Wert.

Im Zeittakt Δt werden für alle erfassten Objekte deren Richtung bzw. Geschwindigkeit gewürfelt. Die Personenanzahl pro Sechseck bzw. Teilgebiet TG wird ermittelt bzw. berechnet und nach Erfassung der realen Daten bzw.

realen Anzahl von Personen pro Teilgebiet TG mit diesen verglichen. Die mit dem personenspezifischen Prognosemodell errechneten Daten werden so mit den erfassten Daten verglichen. Die Regeln des adaptiven Prognosemodells werden durch Einstellung der Parameter des Modells an die real beobachteten bzw. erfassten Daten angepasst. Die neu errechneten Daten stellen eine Kurzzeitprognose für das gesamte System dar. Durch den Vergleich mit den real erfassten Daten ist das Prognose- bzw. Simulationsmodell an die reale Umgebung gekoppelt. Das Prognosemodell ist in einem Teilgebiet TG den realen Verhältnissen mindestens um einen Teilschritt $\Delta t$ voraus. Wenn die realen Bedingungen eingetreten sind bzw. die Prognose zeitlich eingeholt haben, erfolgt ein Abgleich zwischen den realen Daten und den simulierten bzw. berechneten Daten. Dabei können die realen Daten jeweils als Anfangsbedingungen für die neuen Berechnung dienen. Somit führt der Vergleich der realen mit den simulierten Daten einerseits zu einer Anpassung des adaptiven Prognosemodells und andererseits zu neuen Anfangswerten für den nächsten Berechnungsschritt.

Beispielsweise wird die simulierte Anzahl von Personen in einem Teilgebiet TG mit der real mittels Kameras erfassten Anzahl von Personen in dem Teilgebiet TG verglichen. Bei einer möglichen Ausführungsform wird durch Betrachtung von mindestens zwei Prognosezeiträumen aus der absoluten Anzahl von Personen in den Teilgebieten TG zu den verschiedenen Zeitpunkten deren Bewegungsrichtung und deren Geschwindigkeit berechnet.

Aus dem Vergleich der real ermittelten Anzahl von Objekten in einem Teilgebiet TG aus zwei zurückliegenden Aufnahmen pro Teilgebiet TG ist eine Gradientenberechnung möglich und eine Vorhersage über die Fließrichtung bzw. Bewegungsrichtung. Somit ist es möglich, eine Prognose für die Personenanzahl pro Teilgebiet TG im nächsten Berechnungsschritt durchzuführen.

Durch Beobachtung des Funkverkehrs zwischen einem mobilen Telefon einer Person und einer Basisstation lassen sich genaue, personenspezifische Geschwindigkeiten berechnen. Hierdurch ist eine noch höhere Genauigkeit gegeben als bei der Datenerfassung mittels Kameras.

Die ermittelten Daten bilden die Grundlage zur Steuerung der Objektbewegungen. Aus den aktuellen Daten lässt sich der Füllgrad bzw. die Dichte in einem Teilgebiet TG ermitteln. Ein Teilgebiet TG kann beispielsweise normal gefüllt, voll, überfüllt oder kritisch gefüllt sein.

Bei einer möglichen Ausführungsform können auch Bewegungsmuster erkannt werden, beispielsweise ein Bewegungsstau oder ein aufgetretener Unfall. Anschließend können entsprechende Maßnahmen durch die Leitzentrale durchgeführt werden. Ein Beispiel ist die Umleitung von beweglichen Objekten auf andere Straßen.

Bei einer weiteren Ausführungsform des erfindungsgemäßen Verfahrens ist ein personenunabhängiges Prognosemodell mit einem Wahrscheinlichkeitsansatz der Berechnung zugrunde gelegt.

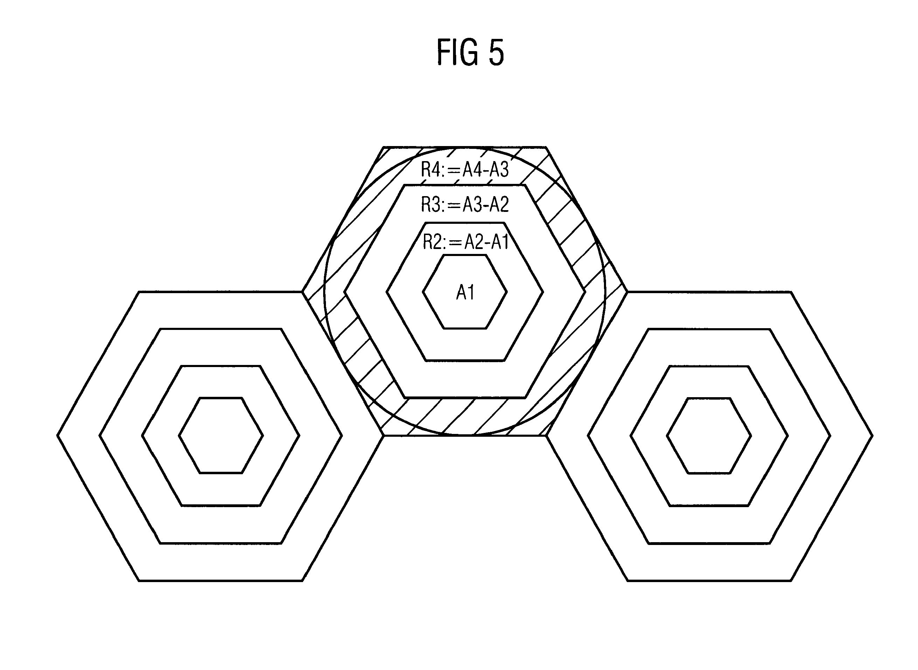

Beispielsweise werden, wie in Fig. 5 dargestellt, jedes Teilgebiet bzw. jedes Sechseck in drei weitere kleinere Sechsecke eingebettet, beispielsweise mit den Seitenlängen $a_1 = 0{,}25{*}a$, $a_2 = 0{,}5{*}a$, $a_3 = 0{,}75{*}a$ bezogen auf die Seitenlänge $a_4 = a$ des ursprünglichen Sechsecks. Prinzipiell können auch feinere oder gröbere Unterteilungen gewählt werden. Zur Berechnung wird die Personenanzahl in den nächsten Berechnungsschritt in dem aktuellen großen Sechseck möglichst genau prognostiziert. Für den Flächeninhalt A des regelmäßigen Sechsecks mit der Seitenlänge A gilt:

$$A = 6*(a*h/2) = 6*sqrt\ (3)/4*a^2 = 3*sqrt\ (3)/2*a^2$$

Für den Radius des Innenkreises eines Sechsecks gilt:

$$r = h = sqrt(3)/2*a = 0{,}86*a$$

Für den Flächeninhalt A1, A2, A3 der oben genannten kleineren Sechsecke bezogen auf das große Sechseck A4 folgt damit:

A1 = 1/16*A4,
A2 = 1/4*A4,
A3 = 9/16*A4.

Für den Flächeninhalt der Randbereiche gemäß Fig. 5 gilt dementsprechend:

A1 = 1/16 * A4 = R1,
A2-A1 = 3/16 * A4 = R2,
A3-A2 = 5/16 * A4 = R3,
A4-A3 = 7/16 * A4 = R4.

Befinden sich n Personen im Gesamtteilgebiet A4 und sind die Personen gleich verteilt, so befinden sich im inneren Kern:

R1: $n_1$ = 1/16 * n Personen, in
R2: $n_2$ = 3/16 * n Personen
R3: $n_3$ = 5/16 * n Personen
R4: $n_4$ = 7/16 * n Personen

Bewegen sich nun die Personen in dem Teilgebiet TG mit einer typischen Geschwindigkeit von beispielsweise v = 5 km/h, erfolgt die Datenerfassung mit einer Rate, die mit $\Delta t$ = 10 s getaktet ist, so bewegen sich die betrachteten Personen in einem Taktzyklus statistisch um die Strecke s = $\Delta t \cdot v$ = 13,8 m vorwärts. Diese Entfernung vom Mittelpunkt des innersten Sechsecks zum Rand des äußersten Sechsecks beträgt d1 = a. Somit ergibt sich die Wahrscheinlichkeit, dass sich eine Person in der Zeitspanne $\Delta t$ aus dem innersten Kreis nach außen aus dem großen Sechseck heraus bewegt zu:

$p_1 = \lambda * s/d_1$, mit $d_1$ = 0,75*a, s = $\Delta t$*v, wobei $\lambda$ ein Modellierungsparameter ist.

Der Modellierungsparameter $\lambda$ < 1 berücksichtigt, dass Personen beispielsweise stehen bleiben oder wieder zurücklaufen können.

Für die Anzahl $n_1$ = 1/16 * n der Personen des innersten Kreises ergibt sich, dass sich im nächsten Takt noch $n_1^{neu} = p_1 * n_1$ Personen
im betrachteten großen Sechseck befinden.

Entsprechend gilt für die Entfernung der anderen inneren Sechsecke nach außen:

$$d_2 = 0,75 * a, \quad d_3 = 0,5 * a, \quad d_4 = 0,25 * a$$

und hiermit analog zu oben:

$$p_i = \lambda * s / d_i, \quad i = 2,4$$

wobei ein Modellparameter $\lambda$ für alle inneren Sechsecke angenommen wird.

Somit ergibt sich für die Gesamtanzahl der Personen im neuen Ablaufzyklus für das betrachtete Teilgebiet bzw. Sechseck:

$$n^{neu} = p_1 * n_1 + p_2 * n_2 * p_3 * n_3 + p_4 * n_4$$

$$= \lambda * s * n * (1/(d_1*16) + 3/(d_2*16) + 5/(d_3*16) + 7/(d_4*16))$$

In einem Zeittakt $\Delta t$ hat sich deshalb mindestens eine Differenz $(n^{neu} - n)$ an Personen aus bzw. in das Sechseck bewegt. Zusätzlich können sich noch $n^{zu\_in}$ bzw. $n^{zu\_out}$ mit $n^{zu\_in} = n^{zu\_out}$ im/aus diesem Gebiet, ursächlich bedingt durch angrenzende Sechsecke, bewegt haben.

Sowohl für das personenspezifische Prognosemodell als auch für das personenunabhängige Prognosemodell können Randbedingungen modelliert werden.

Gibt es beispielsweise einen oder mehrere undurchdringliche Ränder eines Teilgebiets TG, beispielsweise eine Hauswand oder ein Fluss, kann ein aktuell betrachtetes Teilgebiet für die Auswahl der Richtung geändert werden, indem pro Person die nicht aus einem Intervall [1, 6] gewürfelt wird, sondern aus einem Intervall [1, 5]. Der entsprechende Rand des Teilgebiets TG wird als potenzielle Richtung ausgeschlossen. Weisen einer oder mehrere Ränder eines Teilgebiets TG einen Ein- oder Ausgang auf, der einen Personenzu- oder -abfluss erlaubt, wird der Personenabschluss oder der Personenzufluss entsprechend modelliert.

Auch bei dem personenunabhängigen Prognosemodell können entsprechende Randbedingungen gewählt werden. Die Ränder des betrachteten Gesamtgebiets G, das in eine entsprechende Anzahl von Sechsecken bzw. Teilgebiete unterteilt ist, werden dabei besonders betrachtet.

Für ein Teilgebiet TG innerhalb des Gesamtgebietes G, das keine undurchlässigen Ränder aufweist, kann beispielsweise angenommen werden, dass die Zahl $\Delta$ mit der sich die Personenanzahl in dem betrachteten Teilgebiet TG innerhalb eines Zeitschrittes $\Delta t$ verändert, aus den real ermittelten Daten bzw. aus dem Simulationsmodell bekannt ist. Es ist ferner die Anzahl der Personen, die sich zum Zeitpunkt $t_0$ in den angrenzenden Teilgebieten befinden, bekannt. Ist $N_i$ die Anzahl der Personen in den angrenzenden Sechsecken $S_i$ (i = 1 ... 6), so ergibt sich $N_s$ als Summe der Personenanzahl der angrenzenden Sechsecke $S_i$ zu:

$$N_s = \sum N_i, \quad i = 1 \ldots 6$$

Von dem betrachteten Sechseck $S_0$ bewegen sich in das angrenzende Sechseck $S_i$ im nächsten Zeitschritt die folgende Anzahl $\Delta N_i$ von Personen:

$$\Delta N_i = \Delta N \cdot N_i / N_s$$

Die vorgestellten adaptiven Prognosemodelle sind lediglich einfache Ausführungsbeispiele. Bei realen Anwendungen können das adaptive Prognosemodell wesentlich komplexer sein. Dabei werden bewegliche und unbewegliche Objekte mit jeweils unterschiedlichen Objektklassen und entsprechenden Objektmodellen, die jeweils eine Gruppe von Regeln beinhalten, eingesetzt.

Durch das erfindungsgemäße System zur Steuerung von Objektbewegungen ist es möglich, kritische Massen- bzw. Menschenanballungen zu identifizieren. Auch eine Prognose über den zukünftigen Bewegungsverlauf ist möglich. Das erfindungsgemäße System erlaubt die Einleitung von angemessenen Maßnahmen zur Vermeidung sicherheitskritischer Objektansammlungen. Das erfindungsgemäße System erlaubt ferner Aussagen über Personenmengen, Personendichten und -ströme, die nicht nur auf Basis von real ermittelten Daten gemacht werden, sondern auch mit Ergebnissen aus dem Prognosemodell angereichert werden. Daher eignet sich das erfindungsgemäße System insbesondere für Anwendungen bei denen reale Daten für Teilbereiche nicht oder relativ ungenau vorliegen. Es ist mit dem erfindungsgemäßen System möglich, Aussagen über nicht einsehbare Teilgebiete TG zu treffen und entsprechende Maßnahmen einzuleiten. Das erfindungsgemäße System erlaubt Prognosen für zukünftige Dichtverteilungen, so dass sicherheitskritische Ansammlungen besser vorhersagbar sind und Maßnahmen schneller eingeleitet werden können. Das erfindungsgemäße System erlaubt eine vorausschauende Steuerung von Objektbewegungen und erhöht somit die Sicherheit.

Das erfindungsgemäße Verfahren und System eignet sich für eine große Anzahl unterschiedlicher Anwendungsgebiete. Einige exemplarische Anwendungsgebiete sind Konzerte, Demonstrationen oder sonstige öffentliche Veranstaltungen. Weiterhin eignet sich das erfindungsgemäße System und Verfahren für die Verkehrsleittechnik, beispielsweise im Bereich des Autoverkehrs oder der Schifffahrt. Beliebige Veranstaltungen, wie öffentliche Feste, können mit dem erfindungsgemäßen System überwacht werden. Weitere Beispiele sind Popkonzerte, Fußballstadien oder Pilgerorte, wie beispielsweise die Hadsch in Mekka.

Die gesteuerten Objekte sind nicht nur Personen oder Fahrzeuge, sondern es kann sich auch um sonstige Objekte, wie beispielsweise Koffer auf einem Gepäckverteilungsband handeln.

**Patentansprüche**

1.  Verfahren zur Steuerung von Bewegungen einer Vielzahl von Objekten in einem vorgegebenen Gebiet, das mehrere aneinander grenzende Teilgebiete (TG) aufweist, mit den folgenden Schritten:

    (a) Berechnen einer nach einer vorgegebenen Prognosezeitdauer zu erwartenden Anzahl von Objekten pro Teilgebiet (TG) mittels eines adaptiven Prognosemodels in Abhängigkeit von einer Anzahl von Objekten in den Teilgebieten;
    (b) Vergleichen der berechneten zu erwartenden Anzahl von Objekten in den Teilgebieten (TG) mit einer nach Ablauf der vorgegebenen Prognosezeitdauer erfassten Anzahl von Objekten in den Teilgebieten zur Adaption des Prognosemodells für den nächsten Berechnungsschritt; und
    (c) Steuern der Bewegung der Objekte in Abhängigkeit von der erfassten Anzahl von Objekten in den Teilgebieten (TG), **dadurch gekennzeichnet, dass**

das Vorhandensein von Objekten in Teilgebieten mittels Mobilfunksignalen erfasst wird, die die Objekte mit einer Basisstation eines Mobilfunknetzes austauschen.

2. Verfahren nach Anspruch 1, wobei die Bewegung der Objekte direkt gesteuert wird.

3. Verfahren nach Anspruch 1 wobei die Bewegung der Objekte indirekt mittels Aktoren (8) gesteuert wird.

4. Verfahren nach Anspruch 1, wobei die Teilgebiete durch Vielecke gebildet werden.

5. Verfahren nach Anspruch 4, wobei die Teilgebiete durch Sechsecke gebildet werden.

6. Verfahren nach Anspruch 1, wobei das adaptive Prognosemodell für jedes Objekt ein zugehöriges Objektmodell aufweist.

7. Verfahren nach Anspruch 6, wobei jedes Objektmodell mindestens eine Regel aufweist, die ein Bewegungsverhalten oder einen Zustand des Objekts beschreibt.

8. Verfahren nach Anspruch 7, wobei jedes Objekt einer zugehörigen Objektklasse angehört.

9. Verfahren nach Anspruch 7, wobei die Adaption des Prognosemodells durch Anpassung von Modellparametern oder der Regeln erfolgt.

10. Verfahren nach Anspruch 7, wobei nach der Erfassung der aktuellen Anzahl von Objekten in Teilgebieten geprüft wird, ob mindestens eine Regel eines Objektmodells verletzt wird.

11. Verfahren nach Anspruch 10 wobei, wenn mindestens eine Regel eines Objektmodells verletzt wird, die Bewegung von Objekten derart gesteuert wird, dass nach Ablauf der Prognosezeitdauer keine Regelverletzung mehr vorliegt.

12. Verfahren nach Anspruch 11, wobei das Prognosemodell zur Berücksichtigung vorgenommener Steuervorgänge adaptiert wird.

13. Verfahren nach Anspruch 1, wobei das Prognosemodell ferner zur Berücksichtigung von Umweltveränderungen in dem vorgegebenen Gebiet adaptiert wird.

14. Verfahren nach Anspruch 1, wobei die Objekte durch bewegliche oder durch unbewegliche Objekte gebildet werden.

15. Verfahren nach Anspruch 14, wobei die beweglichen Objekte durch Lebewesen oder durch mobile Geräte gebildet werden.

16. Verfahren nach Anspruch 15, wobei die Lebewesen durch Personen oder Tiere gebildet werden.

17. Verfahren nach Anspruch 15, wobei die mobilen Geräte durch Fahrzeuge gebildet werden.

18. System zur Steuerung von Bewegungen einer Vielzahl von Objekten in einem vorgegebenen Gebiet, das mehrere aneinandergrenzende Teilgebiete (TG) aufweist, mit:

mindestens einer Steuereinheit (4) zur Berechnung einer nach einer Prognosezeitdauer zu erwartenden Anzahl von Objekten in den Teilgebieten (TG) mittels eines adaptiven Prognosemodells in Abhängigkeit von der erfassten Anzahl von Objekten in den Teilgebieten (TG), wobei die Steuereinheit (4) die berechnete zu erwartende Anzahl von Objekten in den Teilgebieten (TG) zwischenspeichert und nach Ablauf einer Prognosezeitdauer mit der dann erfassten Anzahl von Objekten in den Teilgebieten (TG) zur Adaption des Prognosemodells vergleicht, und wobei die Steuereinheit (4) die Bewegung von Objekten in Abhängigkeit von der erfassten Anzahl von Objekten in den Teilgebieten (TG) steuert, **dadurch gekennzeichnet, dass** das System Erfassungseinheiten zur Erfassung einer Anzahl von Objekten in den Teilgebieten (TG) umfasst, wobei die Erfassungseinheiten eine Basisstation eines Funknetzes umfassen, wobei das Vorhandensein von Objekten in Teilgebieten mittels Funksignalen erfasst wird, die die Objekte mit der Basisstation austauschen.

**Claims**

1. Method for controlling movements of a plurality of objects in a predetermined area, comprising several subareas (TG) bordering one another, having the following steps:

   (a) calculating a number of objects to be expected following a predetermined forecast duration per subarea (TG) by means of an adaptive forecast model as a function of a number of objects in the subareas;
   (b) comparing the calculated number of objects to be expected in the subareas (TG) with a number of objects detected following the predetermined forecast duration in the subareas for adaptation of the forecast model for the next calculation step; and
   (c) controlling the movement of the objects as a function of the detected number of objects in the subareas (TG), **characterised in that**

   the presence of objects in subareas is detected by means of mobile radio signals, which exchange the objects with a base station of a mobile radio network.

2. Method according to claim 1, wherein the movement of the objects is controlled directly.

3. Method according to claim 1, wherein the movement of the objects is controlled indirectly by means of actuators (8).

4. Method according to claim 1, wherein the subareas are formed by polygons.

5. Method according to claim 4, wherein the subareas are formed by hexagons.

6. Method according to claim 1, wherein the adaptive forecast model for each object comprises an associated object model.

7. Method according to claim 6, wherein each object model comprises at least one rule, which describes a movement behaviour or a state of the object.

8. Method according to claim 7, wherein each object belongs to an associated object class.

9. Method according to claim 7, wherein the adaptation of the forecast model takes place by adjusting model parameters or the rules.

10. Method according to claim 7, wherein following detection of the current number of objects in the subareas, a check is carried out to determine whether at least one rule of an object model is broken.

11. Method according to claim 10, wherein, if at least one rule of an object model is broken, the movement of objects is controlled such that following completion of the forecast duration, no further rule breaking exists.

12. Method according to claim 11, wherein the forecast model is adapted in order to take control processes into account.

13. Method according to claim 1, wherein the forecast model is further adapted in order to take environmental changes in the predetermined area into account.

14. Method according to claim 1, wherein the objects are formed by moveable or non-moveable objects.

15. Method according to claim 14, wherein the moveable objects are formed by creatures or by mobile devices.

16. Method according to claim 15, wherein the creatures are formed by persons or animals.

17. Method according to claim 15, wherein the mobile devices are formed by vehicles.

18. System for controlling movements of a plurality of objects in a predetermined area, comprising several subareas (TG) bordering one another, having:

at least one control unit (4) for calculating a number of objects to be expected following a forecast duration in the subareas (TG) by means of an adaptive forecast model as a function of the detected number of objects in the subareas (TG),
wherein the control unit (4) buffers the calculated number of objects to be expected in the subareas (TG) and following completion of a forecast duration, compares them with the then detected number of objects in the subareas (TG) for adaptation of the forecast model,
and wherein the control unit (4) controls the movement of objects as a function of the detected number of objects in the subareas (TG), **characterised in that** the system includes detection units for detecting a number of objects in the subareas (TG), wherein the detection units include a base station of a radio network, wherein the presence of objects in subareas is detected by means of radio signals, which exchange the objects with the base station.

**Revendications**

1. Procédé pour commander des déplacements d'une pluralité d'objets dans une zone prédéfinie qui présente plusieurs zones partielles (TG) adjacentes, comprenant les étapes suivantes :

   (a) calculer un nombre d'objets escomptés dans chaque zone partielle (TG) après une durée prévisionnelle prédéfinie au moyen d'un modèle de prévision adaptatif en fonction d'un nombre d'objets dans les zones partielles ;
   (b) comparer le nombre calculé d'objets escomptés dans les zones partielles (TG) à un nombre d'objets détectés dans les zones partielles au terme de la durée prévisionnelle prédéfinie en vue de l'adaptation du modèle de prévision pour l'étape de calcul suivante ; et
   (c) commander le déplacement des objets en fonction du nombre d'objets détectés dans les zones partielles (TG), **caractérisé en ce que**

   la présence d'objets dans des zones partielles est détectée au moyen de signaux radio mobiles que les objets échangent avec une station de base d'un réseau radio mobile.

2. Procédé selon la revendication 1, dans lequel le déplacement des objets est commandé directement.

3. Procédé selon la revendication 1, dans lequel le déplacement des objets est commandé indirectement au moyen d'acteurs (8).

4. Procédé selon la revendication 1, dans lequel les zones partielles sont formées par des rectangles.

5. Procédé selon la revendication 1, dans lequel les zones partielles sont formées par des hexagones.

6. Procédé selon la revendication 1, dans lequel le modèle de prévision adaptatif comprend pour chaque objet un modèle d'objet associé.

7. Procédé selon la revendication 6, dans lequel chaque modèle d'objet comprend au moins une règle qui décrit un comportement de déplacement ou un état de l'objet.

8. Procédé selon la revendication 7, dans lequel chaque objet fait partie d'une classe d'objets associée.

9. Procédé selon la revendication 7, dans lequel l'adaptation du modèle de prévision se fait par adaptation de paramètres de modèle ou des règles.

10. Procédé selon la revendication 7, dans lequel il est vérifié, après la détection du nombre actuel d'objets dans des zones partielles, si au moins une règle d'un modèle d'objet est transgressée.

11. Procédé selon la revendication 10, dans lequel, si au moins une règle d'un modèle d'objet est transgressée, le déplacement d'objets est commandé de telle sorte qu'il n'y ait plus de transgression de règle au terme de la durée prévisionnelle.

**12.** Procédé selon la revendication 11, dans lequel le modèle de prévision est adapté dans le but de tenir compte des opérations de commande effectuées.

**13.** Procédé selon la revendication 1, dans lequel le modèle de prévision est adapté dans le but de tenir compte en outre des changements environnementaux dans la zone prédéfinie.

**14.** Procédé selon la revendication 1, dans lequel les objets sont formés par des objets mobiles ou par des objets immobiles.

**15.** Procédé selon la revendication 14, dans lequel les objets mobiles sont formés par des êtres vivants ou par des appareils mobiles.

**16.** Procédé selon la revendication 15, dans lequel les êtres vivants sont formés par des personnes ou des animaux.

**17.** Procédé selon la revendication 15, dans lequel les appareils mobiles sont formés par des véhicules.

**18.** Système pour commander des déplacements d'une pluralité d'objets dans une zone prédéfinie qui présente plusieurs zones partielles (TG) adjacentes, comprenant :

au moins une unité de commande (4) destinée à calculer un nombre d'objets escomptés dans les zones partielles (TG) après une durée prévisionnelle prédéfinie au moyen d'un modèle de prévision adaptatif en fonction du nombre d'objets détectés dans les zones partielles (TG),
dans lequel l'unité de commande (4) enregistre temporairement le nombre calculé d'objets escomptés dans les zones partielles (TG) et, au terme d'une durée prévisionnelle, le compare au nombre détecté d'objets dans les zones partielles (TG) pour l'adaptation du modèle de prévision,
et dans lequel l'unité de commande (4) commande le déplacement d'objets en fonction du nombre détecté d'objets dans les zones partielles (TG), **caractérisé en ce que** le système comprend des unités de détection destinées à détecter un nombre d'objets dans les zones partielles (TG), lesdites unités de détection comprenant une station de base d'un réseau radio, la présence d'objets dans des zones partielles étant détectée au moyen de signaux radio que les objets échangent avec la station de base.

# FIG 1

EP 2 147 356 B1

FIG 2

1

Leitzentrale  5

Eingabe-einheit — 7

Modell — 6

Daten-verarbeitungs-einheit — 4

Muster-erkennung — 3-1 — $Z_{TGxy}$

Muster-erkennung — 3-2 — $Z_{TGxy}$

Muster-erkennung — 3-3 — $Z_{TGxy}$

Sensoren — 9

Kamera A — 2-1

Kamera B — 2-2

Kamera C — 2-3

Aktoren — 8

Objekte

# FIG 3

S1 — Initialisieren

S2 — Erfassen

S3 — Prognose

S4 — Vergleich

S5 — Regel-verletzung ?     nein

S6 — Steuern

S7 — Modelladaption

S8 — Modelladaption an Umwelt-veränderung

S9 — INC
$t_i := t_i + 1$

# FIG 4

FIG 5

R4:=A4-A3
R3:=A3-A2
R2:=A2-A1
A1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **LIPING FU ; BRUCE HELLINGA ; YONGLIANG ZHU.** Ein adaptives Modell zur Echtzeit-Abschätzung von Abfahrt-Autoschlangen auf verstopften Fernstraßen. *Intelligent Transportation Systems, 2001. Proceedings,* 25. August 2001, ISBN 978-0-7803-7194-1, 219-226